# EUROPÄISCHE PATENTANMELDUNG

(11) **EP 2 028 247 A1**
(43) Veröffentlichungstag der Anmeldung: **25.02.2009**
(21) Anmeldenummer: 08013825.8
(22) Anmeldetag: 01.08.2008
(51) Int. Cl.: C09K 8/52

(54) **Verwendung von 1-Alkyl-5-oxo-pyrrolidin-3-carbonsäureestern als Gashydratinhibitoren mit verbesserter biologischer Abbaubarkeit**

(30) Priorität: 06.08.2007 DE 102007037016
(71) Anmelder: Clariant International Ltd., 4132 Muttenz (CH)
(72) Erfinder: Leinweber, Dirk, 65779 Kelkheim (DE); Rösch, Alexander, 67578 Gimbsheim (DE); Feustel, Michael, 55278 Köngernheim (DE)
(74) Vertreter: Mikulecky, Klaus

(57) **Zusammenfassung**

Gegenstand der Erfindung ist die Verwendung von 1-Alkyl-5-oxo-pyrrolidin-3-carbonsäureestern, darstellbar durch Veresterung von Alkoholen mit 1 bis 100 Hydroxylgruppen mit 1-Alkyl-5-oxo-pyrrolidin-3-carbonsäure, in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

## Beschreibung

Die vorliegende Erfindung betrifft die Verwendung von 1-Alkyl-5-oxo-pyrrolidin-3-carbonsäureestern als Gashydratinhibitoren sowie ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der 1-Alkyl-5-oxo-pyrrolidin-3-carbonsäureester enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25 °C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.
Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Antiagglomerants). Die dabei eingesetzten Inhibitoren behindern entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Antiagglomerants darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

So wird in WO-94/12761 ein Verfahren zur kinetischen Inhibierung der Gashydratbildung durch die Verwendung von Polyvinyllactamen mit einem Molekulargewicht von M_{W} > 40.000 D, und in WO-93/25798 wird ein solches Verfahren unter Verwendung von Polymeren und/oder Copolymeren des Vinylpyrrolidons mit einem Molekulargewicht von M_{W} > 5.000 bis 40.000 D offenbart.

EP-A-0 896 123 offenbart Gashydratinhibitoren, die Copolymere aus alkoxylierter Methacrylsäure ohne Alkyl-Endverschluss und cyclischen N-Vinylverbindungen enthalten können.

In US-5 244 878 wird ein Verfahren zum Verzögern der Bildung oder Vermindern der Bildungstendenz von Gashydraten beschrieben. Hierzu werden Polyole verwendet, die mit Fettsäuren oder Alkenylbernsteinsäureanhydriden verestert werden. Die hergestellten Verbindungen weisen keine Aminosäurefunktionen auf, die mit Clathraten (Käfigmolekülen) interagieren könnten.

Die beschriebenen Additive besitzen nur eingeschränkte Wirksamkeit als kinetische Gashydratinhibitoren und/oder Antiagglomerants, müssen mit Co-Additiven verwendet werden, oder sind nicht in ausreichender Menge oder nur zu hohen Preisen erhältlich.

Um Gashydratinhibitoren auch bei stärkerer Unterkühlung als derzeit möglich, d. h. weiter innerhalb der Hydratregion einsetzen zu können, bedarf es einer weiteren Wirkungssteigerung im Vergleich zu den Hydratinhibitoren des Standes der Technik. Zusätzlich sind in Bezug auf ihre biologische Abbaubarkeit verbesserte Produkte erwünscht.

Aufgabe der vorliegenden Erfindung war es also, Additive zu finden, die sowohl die Bildung von Gashydraten verlangsamen (kinetische Inhibitoren) als auch Gashydratagglomerate klein und pumpbar halten (Antiagglomerants), um so ein breites Anwendungsspektrum mit hohem Wirkpotential zu gewährleisten. Des Weiteren sollten sie in der Lage sein, die derzeit verwendeten thermodynamischen Inhibitoren (Methanol und Glykole), die beträchtliche Sicherheitsprobleme und Logistikprobleme verursachen, zu ersetzen.

Da derzeit verwendete Inhibitoren wie Polyvinylpyrrolidon und Polyvinylcaprolactam nur eine mäßige biologische Abbaubarkeit aufweisen, sollten die erfindungsgemäßen Verbindungen zudem eine verbesserte biologische Abbaubarkeit aufweisen.

Im Stand der Technik sind 1-Alkyl-5-oxo-pyrrolidin-3-carbonsäurederivate bekannt, die nicht als Gashydratinhibitoren sondern in anderen Gebieten eingesetzt werden.

So offenbart GB-1 323 061 N-substituierte 5-Oxo-pyrrolidin-3-carbonsäuren und deren Verwendung in Funktionsflüssigkeiten, insbesondere Hydraulikflüssigkeiten.

US-3 224 975 offenbart 1-Alkyl-5-oxo-pyrrolidin-3-carbonsäuren, die als Korrosionsschutz-Additive in Schmiermitteln eingesetzt werden.

US-4 127 493 offenbart Polyester, die durch Umsetzung von N-substituierten 5-oxo-pyrrolidin-3-carbonsäuren oder -estern mit Alkenylbernsteinsäure oder Alkenylbernsteinsäureanhydrid hergestellt werden, und deren Verwendung als öllösliche Additive in Schmiermitteln.

EP-A-0 069 512 offenbart N-substituierte 5-oxo-pyrrolidin-3-carbonsäuresalze und deren Verwendung als Befeuchtungsmittel.

Wie nun überraschenderweise gefunden wurde, eignen sich sowohl wasserlösliche als auch öllösliche 1-Alkyl-5-oxo-pyrrolidin-3-carbonsäureester als Gashydratinhibitoren. Diese Ester können je nach Struktur sowohl die Keimbildung und das Wachstum von Gashydraten verzögern (kinetische Gashydratinhibitoren) als auch die Agglomeration von Gashydraten unterdrücken (Antiagglomerants). Zudem weisen die erfindungsgemäßen Verbindungen eine deutlich verbesserte biologische Abbaubarkeit auf.

Gegenstand der Erfindung ist daher die Verwendung von 1-Alkyl-5-oxo-pyrrolidin-3-carbonsäureestern, darstellbar durch Veresterung von mindestens einem Alkohol mit 1 bis 100 Hydroxylgruppen mit 1-Alkyl-5-oxo-pyrrolidin-3-carbonsäure, in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

Ein weiterer Gegenstand der Erfindung ist ein Verfahren zur Inhibierung der Bildung von Gashydraten, indem einer mit einer gasförmigen, flüssigen oder festen organischen Phase in Verbindung stehenden wässrigen Phase, in der die Gashydratbildung verhindert werden soll, 1-Alkyl-5-oxo-pyrrolidin-3-carbonsäureester, darstellbar durch Veresterung von mindestens einem Alkohol mit 1 bis 100 Hydroxylgruppen mit 1-Alkyl-5-oxo-pyrrolidin-3-carbonsäure, in Mengen von 0,01 bis 2 Gew.-% zusetzt.

Der Alkohol entspricht vorzugsweise der Formel (1)

R-⁅-OH⁆ₙ (1)

worin R für einen organischen Rest mit 1 bis 100 Kohlenstoffatomen steht. Neben Hydroxylgruppen kann R beliebige weitere Substituenten umfassen, beispielsweise Amino- oder Amidosubstituenten. R steht besonders bevorzugt für einen Alkyl- oder Polyalkylenoxid-Rest mit 1 bis 30 Kohlenstoffatomen. n steht vorzugsweise für eine Zahl von 1 bis 100, insbesondere 2 bis 80, speziell 3 bis 10. Die Zahl der Hydroxylgruppen ist im Allgemeinen kleiner oder gleich der Zahl der Kohlenstoffatome im Rest R.

Besonders bevorzugte Alkohole der Formel (1) sind Methanol, Ethanol, Propanol, Butanol, Pentanol, Isopropanol, Isobutanol, Isopentanol, 2-Ethylhexanol, Heptanol, Octanol, Decanol, Ethylenglykol, Propylenglykol, Butylglykol, Butyldiglykol, Butyltriglykol, Glycerin, Diglycerin, Triglycerin, Tetraglycerin, Polyglycerin, Trimethylolpropan, Pentaerythrit, Dipentaerythrit, Tripentaerythrit, Sorbitol, Sorbitan, Diethylenglykol, Triethylenglykol, Propylenglykol, Dipropylenglykol, Tripropylenglykol und Tris(hydroxymethyl)aminomethan.

Weitere bevorzugte Alkohole sind gesättigte oder ungesättigte C₈-C₂₄ Fettalkohole, insbesondere Dodecanol, Tetradecanol, Hexadecanol, Octadecanol oder Oleylalkohol.

1-Alkyl-5-oxo-pyrrolidin-3-carbonsäure entspricht der Formel (2): 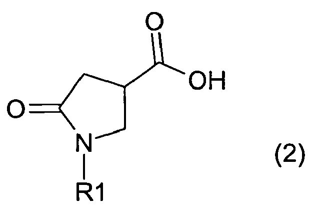 wobei R1 C₁-C₃₀-Alkyl, C₂-C₃₀-Alkenyl oder C₇-C₃₀-Alkylaryl bedeutet.

R1 steht bevorzugt für einen aliphatischen C₁-C₁₀-Rest, der verzweigt oder unverzweigt sein kann. Besonders bevorzugt steht R1 für einen aliphatischen C₃-C₆-Rest, speziell für einen aliphatischen C₄-Rest. Erfindungsgemäß können auch Mischungen von mit unterschiedlichen Resten R1 substituierten 1-Alkyl-5-oxo-pyrrolidin-3-carbonsäuren zur Herstellung der 1-Alkyl-5-oxo-pyrrolidin-3-carbonsäureester eingesetzt werden.

Die Herstellung der 1-Alkyl-5-oxo-pyrrolidin-3-carbonsäuren erfolgt wie im Stand der Technik ausführlich beschrieben durch Umsetzung von Itaconsäure mit primären Aminen und kann wie in EP-A-0 069 512, US-3 224 975 und US-4 127 493 offenbart durchgeführt werden.

In den aus Alkohol und Säure der Formel 2 gebildeten Estern sind bevorzugt mindestens 30 %, besonders bevorzugt mindestens 50 % aller im Alkohol vorhandenen OH-Funktionen verestert.

Die erfindungsgemäßen 1-Alkyl-5-oxo-pyrrolidin-3-carbonsäureester sind durch Veresterung von 1-Alkyl-5-oxo-pyrrolidin-3-carbonsäure mit mindestens einem Alkohol darstellbar. Die Herstellung der erfindungsgemäßen Ester erfolgt durch unkatalysierte oder sauer katalysierte Kondensation der 1-Alkyl-5-oxo-pyrrolidin-3-carbonsäure mit dem Alkohol. Die Reaktionstemperatur liegt im Allgemeinen zwischen 100 und 300 °C, vorzugsweise bei 170 bis 250 °C.

Das bei der Veresterung zur Anwendung kommende molare Verhältnis von OH-Gruppen im Alkohol zur 1-Alkyl-5-oxo-pyrrolidin-3-carbonsäure liegt vorzugsweise zwischen 1 : 0,3 und 1 : 1, insbesondere zwischen 1 : 0,5 und 1 : 1.

Die Reaktion kann bei Atmosphärendruck oder vermindertem Druck durchgeführt werden. Als katalysierende Säuren sind beispielsweise HCl, H₂SO₄, Sulfonsäuren, H₃PO₄ oder saure Ionentauscher zu nennen, die in Mengen von 0,1 bis 5 Gew.-%, bezogen auf das Gewicht des Reaktionsgemisches, verwendet werden. Die Veresterung nimmt im Allgemeinen 3 bis 30 Stunden in Anspruch.

Die erfindungsgemäßen 1-Alkyl-5-oxo-pyrrolidin-3-carbonsäureester können alleine oder in Kombination mit anderen bekannten Gashydratinhibitoren eingesetzt werden. Im Allgemeinen wird man dem zur Hydratbildung neigenden System soviel des erfindungsgemäßen 1-Alkyl-5-oxo-pyrrolidin-3-carbonsäureesters zusetzen, dass man unter den gegebenen Druck- und Temperaturbedingungen eine ausreichende Inhibierung erhält. Die erfindungsgemäßen 1-Alkyl-5-oxo-pyrrolidin-3-carbonsäureester werden im Allgemeinen vorzugsweise in Mengen zwischen 0,02 bis 1 Gew.-% (bezogen auf das Gewicht der wässrigen Phase) verwendet. Werden die erfindungsgemäßen 1-Alkyl-5-oxo-pyrrolidin-3-carbonsäureester in Mischung mit anderen Gashydratinhibitoren verwendet, so beträgt die Konzentration der Mischung 0,01 bis 2 bzw. 0,02 bis 1 Gew.-% in der wässrigen Phase.

Die 1-Alkyl-5-oxo-pyrrolidin-3-carbonsäureester werden vorzugsweise zur Anwendung als Gashydratinhibitoren in Wasser oder in wassermischbaren (bevorzugt alkoholischen) Lösungsmitteln wie beispielsweise Methanol, Ethanol, Propanol, Butanol, Ethylenglykol, 1,2-Propylenglykol, 1,3-Propylenglykol, Glycerin, Diethylenglykol, Triethylenglykol, N-Methylpyrrolidon sowie oxethylierten Monoalkoholen, wie Butylglykol, Isobutylglykol, Butyldiglykol gelöst. Öllösliche 1-Alkyl-5-oxo-pyrrolidin-3-carbonsäureester werden vorzugsweise zur Anwendung als Gashydratinhibitoren in unpolareren Lösungsmitteln wie C₃-C₈-Ketonen, beispielsweise Diisobutylketon, Methylisobutylketon, Cyclohexanon, oder C₅-C₁₂-Alkoholen, beispielsweise 2-Ethylhexanol, gelöst.

### Beispiele

### Herstellung der 1-Alkyl-5-oxo-pyrrolidin-3-carbonsäureester

### Beispiel 1

### Herstellung von 1-Methyl-5-oxo-pyrrolidin-3-carbonsäureisobutylester

In einem 500 ml Vierhalskolben mit Rührer, Thermometer, Stickstoffspülung sowie Rückflusskühler wurden 143 g 1-Methyl-5-oxo-pyrrolidin-3-carbonsäure, 148 g Isobutanol sowie 1,5 g p-Toluolsulfonsäure vermischt und für 8 h bei 140 °C unter Rückfluss erhitzt. Nach Abkühlen und Ersetzen des Rückflusskühlers durch eine Destillationsbrücke wurden innerhalb von 6 h bei 140 °C ca. 100 ml Isobutanol-Wasser-Mischung abdestilliert. Dabei werden ca. 193 g 1-Methyl-5-oxo-pyrrolidin-3-carbonsäureisobutylester mit einer Verseifungszahl von 280 mg KOH/g erhalten.

### Beispiel 2

### Herstellung von 1-Methyl-5-oxo-pyrrolidin-3-carbonsäure-2-ethylhexylester

In einem 500 ml Vierhalskolben mit Rührer, Thermometer, Stickstoffspülung sowie Rückflusskühler wurden 143 g 1-Methyl-5-oxo-pyrrolidin-3-carbonsäure, 195 g 2-Ethylhexanol sowie 1,5 g p-Toluolsulfonsäure vermischt und für 4 h bei 200 °C unter Rückfluss erhitzt. Nach Abkühlen und Ersetzen des Rückflusskühlers durch eine Destillationsbrücke wurden innerhalb von 6 h bei 200 °C ca. 88 ml 2-Ethylhexanol-Wasser-Mischung abdestilliert. Dabei werden ca. 251 g 1-Methyl-5-oxo-pyrrolidin-3-carbonsäure-2-ethylhexylester mit einer Verseifungszahl von 217 mg KOH/g erhalten.

### Beispiel 3

### Herstellung von Glycerin-tri(1-methyl-5-oxo-pyrrolidin-3-carboxylat)

In einem 250 ml Vierhalskolben mit Rührer, Thermometer, Stickstoffspülung sowie Destillationsbrücke wurden 143 g 1-Methyl-5-oxo-pyrrolidin-3-carbonsäure, 31 g Glycerin sowie 1,0 g p-Toluolsulfonsäure vermischt und auf 200 °C erhitzt. Innerhalb von 12 h bei 200 °C wurden ca. 18 ml Wasser abdestilliert. Dabei wurden ca. 155 g Glycerin-tri(1-methyl-5-oxo-pyrrolidin-3-carboxylat) mit einer Verseifungszahl von 357 mg KOH/g erhalten.

### Beispiel 4

### Herstellung von Pentaerythrit-di(1-methyl-5-oxo-pyrrolidin-3-carboxylat)

In einem 500 ml Vierhalskolben mit Rührer, Thermometer, Stickstoffspülung sowie Destillationsbrücke wurden 143 g 1-Methyl-5-oxo-pyrrolidin-3-carbonsäure, 68 g Pentaerythrit sowie 1,0 g p-Toluolsulfonsäure vermischt und auf 200°C erhitzt. Innerhalb von 8 h bei 200 °C wurden ca. 18 ml Wasser abdestilliert. Dabei wurden ca. 195 g Pentaerythrit-di(1-methyl-5-oxo-pyrrolidin-3-carboxylat) mit einer Verseifungszahl von 290 mg KOH/g erhalten.

### Beispiel 5

### Herstellung von Dipentaerythrit-tetra(1-methyl-5-oxo-pyrrolidin-3-carboxylat)

In einem 500 ml Vierhalskolben mit Rührer, Thermometer, Stickstoffspülung sowie Destillationsbrücke wurden 143 g 1-Methyl-5-oxo-pyrrolidin-3-carbonsäure, 64 g Dipentaerythrit sowie 1,0 g p-Toluolsulfonsäure vermischt und auf 200 °C erhitzt. Innerhalb von 10 h bei 200 °C wurden ca. 18 ml Wasser abdestilliert. Dabei wurden ca. 189 g Dipentaerythrittetra(1-methyl-5-oxo-pyrrolidin-3-carboxylat) mit einer Verseifungszahl von 299 mg KOH/g erhalten.

### Beispiel 6

### Herstellung von Butyltriglykol-(1-methyl-5-oxo-pyrrolidin-3-carboxylat)

In einem 500 ml Vierhalskolben mit Rührer, Thermometer, Stickstoffspülung sowie Destillationsbrücke wurden 143 g 1-Methyl-5-oxo-pyrrolidin-3-carbonsäure, 206 g Butyltriglycol sowie 1,5 g p-Toluolsulfonsäure vermischt und auf 200 °C erhitzt. Innerhalb von 8 h bei 200 °C wurden ca. 18 ml Wasser abdestilliert. Dabei wurden ca. 334 g Butyltriglykol-(1-methyl-5-oxo-pyrrolidin-3-carboxylat) mit einer Verseifungszahl von 172 mg KOH/g erhalten.

### Beispiel 7

### Herstellung von (Oleylalkohol + 5 EO)-(1-methyl-5-oxo-pyrrolidin-3-carboxylat)

In einem 1000 ml Vierhalskolben mit Rührer, Thermometer, Stickstoffspülung sowie Destillationsbrücke wurden 143 g 1-Methyl-5-oxo-pyrrolidin-3-carbonsäure, 490 g Oleylalkohol + 5 EO sowie 2,0 g p-Toluolsulfonsäure vermischt und auf 200 °C erhitzt. Innerhalb von 8 h bei 200 °C wurden ca. 18 ml Wasser abdestilliert. Dabei wurden ca. 617 g (Oleylalkohol + 5 EO)-(1-methyl-5-oxo-pyrrolidin-3-carboxylat) mit einer Verseifungszahl von 93 mg KOH/g erhalten.

### Beispiel 8

### Herstellung von Polyglycerin(n=20)-poly(1-methyl-5-oxo-pyrrolidin-3-carboxylat)

In einem 500 ml Vierhalskolben mit Rührer, Thermometer, Stickstoffspülung sowie Destillationsbrücke wurden 143 g 1-Methyl-5-oxo-pyrrolidin-3-carbonsäure, 129 g Polyglycerin (Kondensationsgrad n = 20) sowie 1,5 g p-Toluolsulfonsäure vermischt und auf 200°C erhitzt. Innerhalb von 16 h bei 200 °C wurden ca. 18 ml Wasser abdestilliert. Dabei wurden ca. 256 g Polyglycerin(n = 20)-poly(1-methyl-5-oxo-pyrrolidin-3-carboxylat) mit einer Verseifungszahl von 224 mg KOH/g erhalten.

### Beispiel 9

### Herstellung von Polyglycerin(n=40)-poly(1-methyl-5-oxo-pyrrolidin-3-carboxylat)

In einem 500 ml Vierhalskolben mit Rührer, Thermometer, Stickstoffspülung sowie Destillationsbrücke wurden 143 g 1-Methyl-5-oxo-pyrrolidin-3-carbonsäure, 86 g Polyglycerin (Kondensationsgrad n = 40) sowie 1,5 g p-Toluolsulfonsäure vermischt und auf 200 °C erhitzt. Innerhalb von 20 h bei 200 °C wurden ca. 18 ml Wasser abdestilliert. Dabei wurden ca. 213 g Polyglycerin(n=40)-poly(1-methyl-5-oxo-pyrrolidin-3-carboxylat) mit einer Verseifungszahl von 268 mg KOH/g erhalten.

### Beispiel 10

### Herstellung von 1-Isobutyl-5-oxo-pyrrolidin-3-carbonsäureisobutylester

In einem 500 ml Vierhalskolben mit Rührer, Thermometer, Stickstoffspülung sowie Rückflusskühler wurden 185 g 1-Isobutyl-5-oxo-pyrrolidin-3-carbonsäure, 148 g Isobutanol sowie 1,5 g p-Toluolsulfonsäure vermischt und für 8 h bei 140 °C unter Rückfluss erhitzt. Nach Abkühlen und Ersetzen des Rückflusskühlers durch eine Destillationsbrücke wurden innerhalb von 6 h bei 140 °C ca. 101 ml Isobutanol-Wasser-Mischung abdestilliert. Dabei werden ca. 236 g 1-Isobutyl-5-oxo-pyrrolidin-3-carbonsäureisobutylester mit einer Verseifungszahl von 237 mg KOH/g erhalten.

### Beispiel 11

### Herstellung von 1-Isobutyl-5-oxo-pyrrolidin-3-carbonsäure-2-ethylhexylester

In einem 500 ml Vierhalskolben mit Rührer, Thermometer, Stickstoffspülung sowie Rückflusskühler wurden 185 g 1-Isobutyl-5-oxo-pyrrolidin-3-carbonsäure, 195 g 2-Ethylhexanol sowie 2,0 g p-Toluolsulfonsäure vermischt und für 4 h bei 200 °C unter Rückfluss erhitzt. Nach Abkühlen und Ersetzen des Rückflusskühlers durch eine Destillationsbrücke wurden innerhalb von 6 h bei 200 °C ca. 89 ml 2-Ethylhexanol-Wasser-Mischung abdestilliert. Dabei werden ca. 294 g 1-Isobutyl-5-oxo-pyrrolidin-3-carbonsäure-2-ethylhexylester mit einer Verseifungszahl von 193 mg KOH/g erhalten.

### Beispiel 12

### Herstellung von Glycerin-tri(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 31 g Glycerin sowie 1,0 g p-Toluolsulfonsäure vermischt und auf 200 °C erhitzt. Innerhalb von 12 h bei 200 °C wurden ca. 18 ml Wasser abdestilliert. Dabei wurden ca. 199 g Glycerin-tri(1-isobutyl-5-oxo-pyrrolidin-3-carboxylat) mit einer Verseifungszahl von 285 mg KOH/g erhalten.

### Beispiel 13

### Herstellung von Pentaerythrit-di(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 68 g Pentaerythrit sowie 1,5 g p-Toluolsulfonsäure vermischt und auf 200 °C erhitzt. Innerhalb von 8 h bei 200 °C wurden ca. 18 ml Wasser abdestilliert. Dabei wurden ca. 235 g Pentaerythrit-di(1-isobutyl-5-oxo-pyrrolidin-3-carboxylat) mit einer Verseifungszahl von 241 mg KOH/g erhalten.

### Beispiel 14

### Herstellung von Dipentaerythrit-tetra(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 64 g Dipentaerythrit sowie 1,5 g p-Toluolsulfonsäure vermischt und auf 200 °C erhitzt. Innerhalb von 10 h bei 200 °C wurden ca. 18 ml Wasser abdestilliert. Dabei wurden ca. 233 g Dipentaerythrit-tetra(1-isobutyl-5-oxo-pyrrolidin-3-carboxylat) mit einer Verseifungszahl von 245 mg KOH/g erhalten.

### Beispiel 15

### Herstellung von Butyltriglykol-(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 206 g Butyltriglycol sowie 2,0 g p-Toluolsulfonsäure vermischt und auf 200 °C erhitzt. Innerhalb von 8 h bei 200 °C wurden ca. 18 ml Wasser abdestilliert. Dabei wurden ca. 374 g Butyltriglykol-(1-isobutyl-5-oxo-pyrrolidin-3-carboxylat) mit einer Verseifungszahl von 153 mg KOH/g erhalten.

### Beispiel 16

### Herstellung von (Oleylalkohol + 5 EO)-(1-isobutyl-5-oxo-pyrrolidin-3-carboxylat)

In einem 1000 ml Vierhalskolben mit Rührer, Thermometer, Stickstoffspülung sowie Destillationsbrücke wurden 185 g 1-Isobutyl-5-oxo-pyrrolidin-3-carbonsäure, 490 g Oleylalkohol + 5 EO sowie 3,0 g p-Toluolsulfonsäure vermischt und auf 200 °C erhitzt. Innerhalb von 8 h bei 200 °C wurden ca. 18 ml Wasser abdestilliert. Dabei wurden ca. 660 g (Oleylalkohol + 5 EO)-(1-isobutyl-5-oxo-pyrrolidin-3-carboxylat) mit einer Verseifungszahl von 88 mg KOH/g erhalten.

### Beispiel 17

### Herstellung von Polyglycerin(n=20)-poly(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 129 g Polyglycerin (Kondensationsgrad n = 20) sowie 1,5 g p-Toluolsulfonsäure vermischt und auf 200 °C erhitzt. Innerhalb von 16 h bei 200 °C wurden ca. 18 ml Wasser abdestilliert. Dabei wurden ca. 298 g Polyglycerin(n=20)-poly(1-isobutyl-5-oxo-pyrrolidin-3-carboxylat) mit einer Verseifungszahl von 192 mg KOH/g erhalten.

### Beispiel 18

### Herstellung von Polyglycerin(n=40)-poly(1-isobutyl-5-oxo-pyrrolidin-3-carboxylat)

In einem 500 ml Vierhalskolben mit Rührer, Thermometer, Stickstoffspülung sowie Destillationsbrücke wurden 185 g 1-Isobutyl-5-oxo-pyrrolidin-3-carbonsäure, 86 g Polyglycerin (Kondensationsgrad n = 40) sowie 1,5 g p-Toluolsulfonsäure vermischt und auf 200 °C erhitzt. Innerhalb von 20 h bei 200 °C wurden ca. 18 ml Wasser abdestilliert. Dabei wurden ca. 272 g Polyglycerin(n=40)-poly(1-isobutyl-5-oxo-pyrrolidin-3-carboxylat) mit einer Verseifungszahl von 224 mg KOH/g erhalten.

### Beispiel 19

### Herstellung von 1-Oleyl-5-oxo-pyrrolidin-3-carbonsäureisobutylester

In einem 1000 ml Vierhalskolben mit Rührer, Thermometer, Stickstoffspülung sowie Rückflusskühler wurden 380 g 1-Oleyl-5-oxo-pyrrolidin-3-carbonsäure, 148 g Isobutanol sowie 2,0 g p-Toluolsulfonsäure vermischt und für 8 h bei 140 °C unter Rückfluss erhitzt. Nach Abkühlen und Ersetzen des Rückflusskühlers durch eine Destillationsbrücke wurden innerhalb von 6 h bei 140 °C ca. 97 ml Isobutanol-Wasser-Mischung abdestilliert. Dabei werden ca. 433 g 1-Oleyl-5-oxo-pyrrolidin-3-carbonsäureisobutylester mit einer Verseifungszahl von 132 mg KOH/g erhalten.

### Beispiel 20

### Herstellung von 1-Oleyl-5-oxo-pyrrolidin-3-carbonsäure-2-ethylhexylester

In einem 1000 ml Vierhalskolben mit Rührer, Thermometer, Stickstoffspülung sowie Rückflusskühler wurden 380 g 1-Oleyl-5-oxo-pyrrolidin-3-carbonsäure, 195 g 2-Ethylhexanol sowie 2,5 g p-Toluolsulfonsäure vermischt und für 4 h bei 200 °C unter Rückfluss erhitzt. Nach Abkühlen und Ersetzen des Rückflusskühlers durch eine Destillationsbrücke wurden innerhalb von 6 h bei 200 °C ca. 89 ml 2-Ethylhexanol-Wasser-Mischung abdestilliert. Dabei werden ca. 484 g 1-Oleyl-5-oxo-pyrrolidin-3-carbonsäure-2-ethylhexylester mit einer Verseifungszahl von 117 mg KOH/g erhalten.

### Beispiel 21

### Herstellung von Glycerin-tri(1-oleyl-5-oxo-pyrrolidin-3-carboxylat)

In einem 1000 ml Vierhalskolben mit Rührer, Thermometer, Stickstoffspülung sowie Destillationsbrücke wurden 380 g 1-oleyl-5-oxo-pyrrolidin-3-carbonsäure, 31 g Glycerin sowie 2,0 g p-Toluolsulfonsäure vermischt und auf 200 °C erhitzt. Innerhalb von 12 h bei 200 °C wurden ca. 18 ml Wasser abdestilliert. Dabei wurden ca. 394 g Glycerin-tri(1-oleyl-5-oxo-pyrrolidin-3-carboxylat) mit einer Verseifungszahl von 144 mg KOH/g erhalten.

### Beispiel 22

### Herstellung von Pentaerythrit-di(1-oleyl-5-oxo-pyrrolidin-3-carboxylat)

In einem 1000 ml Vierhalskolben mit Rührer, Thermometer, Stickstoffspülung sowie Destillationsbrücke wurden 380 g 1-Oleyl-5-oxo-pyrrolidin-3-carbonsäure, 68 g Pentaerythrit sowie 2,0 g p-Toluolsulfonsäure vermischt und auf 200 °C erhitzt. Innerhalb von 8 h bei 200 °C wurden ca. 18 ml Wasser abdestilliert. Dabei wurden ca. 432 g Pentaerythrit-di(1-oleyl-5-oxo-pyrrolidin-3-carboxylat) mit einer Verseifungszahl von 132 mg KOH/g erhalten.

### Beispiel 23

### Herstellung von Dipentaerythrit-tetra(1-oleyl-5-oxo-pyrrolidin-3-carboxylat)

In einem 1000 ml Vierhalskolben mit Rührer, Thermometer, Stickstoffspülung sowie Destillationsbrücke wurden 380 g 1-Oleyl-5-oxo-pyrrolidin-3-carbonsäure, 64 g Dipentaerythrit sowie 2,0 g p-Toluolsulfonsäure vermischt und auf 200 °C erhitzt. Innerhalb von 10 h bei 200 °C wurden ca. 18 ml Wasser abdestilliert. Dabei wurden ca. 428 g Dipentaerythrit-tetra(1-oleyl-5-oxo-pyrrolidin-3-carboxylat) mit einer Verseifungszahl von 134 mg KOH/g erhalten.

### Beispiel 24

### Herstellung von Polyglycerin(n=20)-poly(1-oleyl-5-oxo-pyrrolidin-3-carboxylat)

In einem 1000 ml Vierhalskolben mit Rührer, Thermometer, Stickstoffspülung sowie Destillationsbrücke wurden 380 g 1-Oleyl-5-oxo-pyrrolidin-3-carbonsäure, 129 g Polyglycerin (Kondensationsgrad n = 20) sowie 2,5 g p-Toluolsulfonsäure vermischt und auf 200 °C erhitzt. Innerhalb von 16 h bei 200 °C wurden ca. 18 ml Wasser abdestilliert. Dabei wurden ca. 493 g Polyglycerin(n=20)-poly(1-oleyl-5-oxo-pyrrolidin-3-carboxylat) mit einer Verseifungszahl von 117 mg KOH/g erhalten.

### Beispiel 25

### Herstellung von Polyglycerin(n=40)-poly(1-oleyl-5-oxo-pyrrolidin-3-carboxylat)

In einem 1000 ml Vierhalskolben mit Rührer, Thermometer, Stickstoffspülung sowie Destillationsbrücke wurden 380 g 1-oleyl-5-oxo-pyrrolidin-3-carbonsäure, 86 g Polyglycerin (Kondensationsgrad n = 40) sowie 2,0 g p-Toluolsulfonsäure vermischt und auf 200 °C erhitzt. Innerhalb von 20 h bei 200 °C wurden ca. 18 ml Wasser abdestilliert. Dabei wurden ca. 450 g Polyglycerin(n=40)-poly(1-oleyl-5-oxo-pyrrolidin-3-carboxylat) mit einer Verseifungszahl von 128 mg KOH/g erhalten.

### Wirksamkeit der Produkte als Gashydratinhibitoren

Zur Untersuchung der inhibierenden Wirkung der 1-Alkyl-5-oxo-pyrrolidin-3-carbonsäureester wurde ein Stahlrührautoklav mit Temperatursteuerung, Druck- und Drehmomentaufnehmer mit 450 ml Innenvolumen benutzt. Für Untersuchungen zur kinetischen Inhibierung wurde der Autoklav mit destillierten Wasser und Gas im Volumenverhältnis 20:80 gefüllt, für Untersuchungen der Agglomeratinhibierung wurde zusätzlich Kondensat zugegeben. Anschließend wurden 50 bar Erdgas aufgedrückt.

Ausgehend von einer Anfangstemperatur von 20 °C wurde innerhalb 3 h auf 4 °C abgekühlt, dann 18 h bei 4 °C gerührt und innerhalb von 2 h wieder auf 20 °C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und ein leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Produktes wird die Zeit vom Erreichen der Minimaltemperatur von 4°C bis zur ersten Gasaufnahme (T_{ind}) bzw. die Zeit bis zum Anstieg des Drehmomentes (T_{agg}) benutzt. Lange Induktionszeiten bzw. Agglomerationszeiten weisen auf eine Wirkung als kinetischer Inhibitor hin. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, fein verteilte Hydratkristalle in der Kondensatphase, die sich nicht zusammenlagern und somit nicht zum Verstopfen der zum Gastransport und zur Gasförderung dienenden Installationen führen.

### Testergebnisse

Zusammensetzung des verwendeten Erdgases:
Methan 84,8 %, Ethan 9,2 %, Propan 2,6 %, Butan 0,9 %, Kohlendioxid 1,6 %, Stickstoff 0,9 %.

Als Vergleichssubstanz wurde ein kommerziell erhältlicher Gashydratinhibitor auf Basis Polyvinylpyrrolidon verwendet. Die Dosierrate betrug bei allen Versuchen 5000 ppm bezogen auf die Wasserphase.

| 1-Alkyl-5-oxo-pyrrolidin-3-carbonsäureester aus Beispiel | T_{ind} (h) | T_{agg} (h) |
|---|---|---|
| Blindwert | 0 | 0 |
| 1 | 10,9 | 11,0 |
| 2 | 11,5 | 11,7 |
| 3 | 12,0 | 12,5 |
| 4 | 11,4 | 11,5 |
| 5 | 10,0 | 10,1 |
| 6 | 13,1 | 13,4 |
| 8 | 12,7 | 12,8 |
| 9 | 13,0 | 13,9 |
| 10 | 16,1 | 17,0 |
| 11 | 17,5 | 18,3 |
| 12 | 18,1 | 18,8 |
| 13 | 16,9 | 17,4 |
| 14 | 15,3 | 15,9 |
| 15 | 16,1 | 17,2 |
| 17 | 17,5 | 18,9 |
| 18 | 17,6 | 19,5 |
| Vergleich | 3,5 | 3,6 |

Wie aus den obigen Testresultaten zu erkennen ist, wirken die erfindungsgemäßen 1-Alkyl-5-oxo-pyrrolidin-3-carbonsäureester als kinetische Gashydratinhibitoren und zeigen eine deutliche Verbesserung gegenüber dem Stand der Technik.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5000 ppm des jeweiligen Additivs zugegeben.
Bei einem Autoklavendruck von 50 bar und einer Rührgeschwindigkeit von 500 U/min wurde die Temperatur von anfangs 20 °C innerhalb 3 Stunden auf 4 °C abgekühlt, dann 18 Stunden bei 4 °C gerührt und wieder aufgewärmt. Dabei wurden die Agglomerationszeit bis zum Auftreten von Gashydrat-Agglomeraten und das dabei auftretende Drehmoment am Rührer gemessen, das ein Maß für die Agglomeration der Gashydrate ist.
Als Vergleichssubstanz wurde ein kommerziell erhältlicher Anti-Agglomerant (quartäres Ammoniumsalz) herangezogen.

| 1-Alkyl-5-oxo-pyrrolidin-3-carbonsäureester aus Beispiel | T_{agg} (h) | Mₘₐₓ (Ncm) |
|---|---|---|
| Blindwert | 0,1 | 15,9 |
| 7 | 6,5 | 0,9 |
| 16 | 5,9 | 1,0 |
| 19 | 6,0 | 1,2 |
| 20 | 3,5 | 2,1 |
| 21 | 2,9 | 2,0 |
| 22 | 3,8 | 1,9 |
| 23 | 3,8 | 2,0 |
| 24 | 4,1 | 2,3 |
| 25 | 3,0 | 2,0 |
| Vergleich | 2,6 | 4,1 |

Wie aus diesen Beispielen zu ersehen ist, sind die gemessenen Drehmomente im Vergleich zum Blindwert trotz Gashydratbildung stark reduziert. Dies spricht für eine deutliche agglomerat-inhibierende Wirkung der erfindungsgemäßen Produkte.

Zusätzlich weisen die Produkte unter den Versuchsbedingungen auch eine deutliche Wirkung als kinetische Inhibitoren auf. Sämtliche Beispiele zeigen eine deutlich bessere Performance als der kommerziell erhältliche Anti-Agglomerant (Vergleich = Stand der Technik).

Im Folgenden wird die deutlich verbesserte biologische Abbaubarkeit (nach OECD 306) von ausgewählten erfindungsgemäßen Verbindungen im Vergleich zum Stand der Technik (kommerziell erhältliches Polyvinylpyrrolidon) aufgezeigt.

| 1-Alkyl-5-oxo-pyrrolidin-3-carbonsäureester aus Beispiel | Biologische Abbaubarkeit 28 Tage (OECD 306) |
|---|---|
| Polyvinylpyrrolidon | 5 |
| 1 | 81 |
| 2 | 66 |
| 3 | 90 |
| 10 | 73 |
| 11 | 60 |
| 12 | 85 |
| 16 | 65 |
| 19 | 69 |

## Patentansprüche

1. Verwendung von 1-Alkyl-5-oxo-pyrrolidin-3-carbonsäureestern, darstellbar durch Veresterung von mindestens einem Alkohol mit 1 bis 100 Hydroxylgruppen mit 1-Alkyl-5-oxo-pyrrolidin-3-carbonsäure, in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

2. Verwendung nach Anspruch 1, wobei der Alkohol der Formel (1) entspricht
R-⁅OH]ₙ (1)
worin R für einen organischen Rest mit 1 bis 100 Kohlenstoffatomen und n für eine Zahl von 1 bis 100 stehen.

3. Verwendung gemäß Anspruch 2, wobei R für einen Alkyl-, Alkenyl- oder Polyalkylenoxid-Rest mit 1 bis 30 Kohlenstoffatomen steht.

4. Verwendung gemäß Anspruch 2 und/oder 3, wobei n für eine Zahl von 1 bis 10 steht.

5. Verwendung gemäß einem oder mehreren der Ansprüche 1 bis 4, worin der Alkohol aus Methanol, Ethanol, Propanol, Butanol, Pentanol, Isopropanol, Isobutanol, Isopentanol, 2-Ethylhexanol, Heptanol, Octanol, Decanol, Ethylenglykol, Propylenglykol, Butylglykol, Butyldiglykol, Butyltriglykol, Glycerin, Diglycerin, Triglycerin, Tetraglycerin, Polyglycerin, Trimethylolpropan, Pentaerythrit, Dipentaerythrit, Tripentaerythrit, Sorbitol, Sorbitan, Diethylenglykol, Triethylenglykol, Propylenglykol, Dipropylenglykol, Tripropylenglykol, Tris(hydroxymethyl)aminomethan, Dodecanol, Tetradecanol, Hexadecanol, Octadecanol oder Oleylalkohol ausgewählt ist.

6. Verwendung gemäß einem oder mehreren der Ansprüche 1 bis 5, wobei im Ester mindestens 30 % aller im Alkohol vorhandenen OH-Gruppen verestert sind.
